# EUROPEAN PATENT SPECIFICATION

(11) **EP 1 621 815 B1**
(45) Date of publication and mention of the grant of the patent: **17.10.2007**
(21) Application number: 04425537.0
(22) Date of filing: 20.07.2004
(51) Int. Cl.: F23R 3/00

(54) **Microcombustor**
Mikrobrenner
Micro-brûleur

(43) Date of publication of application: 01.02.2006
(73) Proprietor: C.R.F. SOCIETA' CONSORTILE PER AZIONI, 10043 Orbassano (Torino) (IT)
(72) Inventor: Perlo, Pietro, 10043 Orbassano (Torino) (IT); Innocenti, Gianfranco, 10043 Orbassano (Torino) (IT)
(74) Representative: Quinterno, Giuseppe

(56) References cited:
- EP-A- 1 350 943
- US-A- 5 901 550
- SHCHELKIN K. I.: "Effect of Tube Surface Roughness on Origin and Propagation of Detonation in Gas" JOURNAL OF EXPERIMENTAL AND THEORETICAL PHYSICS, vol. 10, 1940, pages 823-827, XP009054544 USSR

## Description

The present inventions relates to improvements in microcombustors.

The invention relates in particular to a microcombustor of the type defined in the preamble of claim 1.

A microcombustor of this type is disclosed for example, in the article "Effect of Tube Surface Roughness on Origin and Propagation of Detonation in Gas" by K.I. Shchelkin, published in the Journal of Experimental and Theoretical Physics (USSR), 10, 1940, pages 823-827.

One object of the present invention is to provide improved microcombustors of this type.

This and other objects are achieved according to the invention with a microcombustor having the features specified in claim 1.

Further characteristics and advantages of the invention will become apparent from the following detailed description given purely by way of non-limitative example, with reference to the attached drawings, in which:
Figure 1 is a partial view in axial section of a microcombustor according to the present invention;
Figure 2 is a transverse section taken on the line II-II of Figure 1;
Figure 3 is a partial view in axial section of a microcombustor; and
Figure 4 is a transverse sectional view of a further microcombustor.

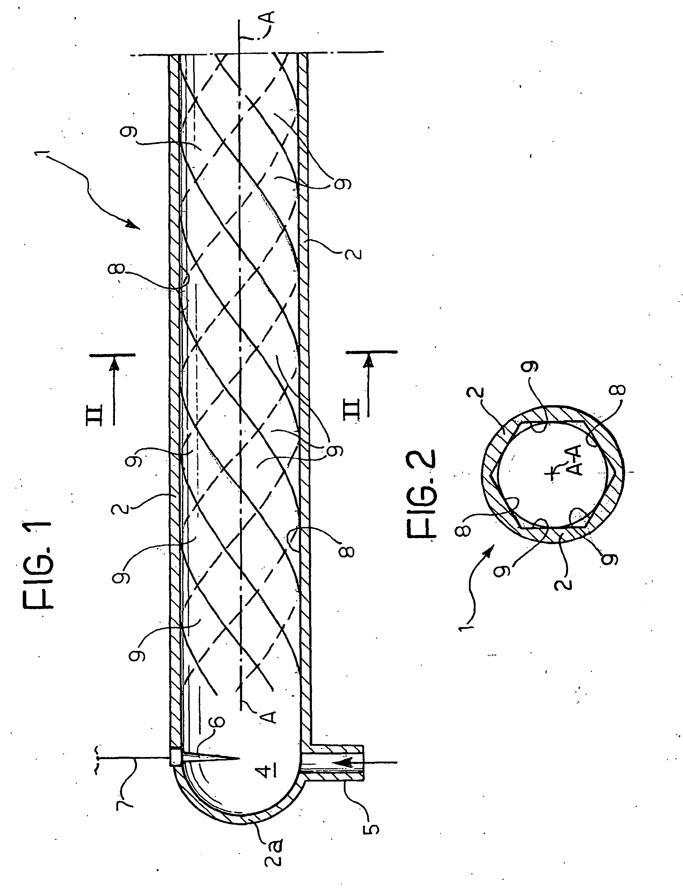

In Figure 1 the reference 1 generally indicates a microcombustor according to the present invention. This microcombustor comprises, in a manner known per se, a body 2 of essentially tubular form.

One end 2a of the body 2 is closed. Close to this end, in the body 2, there is defined a chamber 4 for supply and ignition of a fuel mixture, introduced into this chamber for example through a supply coupling 5.

Into the chamber 4 extends an ignition device 6 controllable by means of an electrical control line 7.

The end 4 of the chamber of the microcombustor communicates with a duct 8 within the body 2.

The duct 8 has a length very much greater than its average transverse dimension. The length of the duct 8 can be for example 20 times the average transverse dimension but may even be 100 times this dimension.

The duct 8 is able to allow generation and propagation of the combustion initiated in the chamber 4, and propagation of the consequent pressure wave as well as the transition from the slow deflagration condition to the fast deflagration condition and/or to the detonation regime.

Conveniently, the internal surface of the duct 8 has a plurality of formations able to impart to the flow of gas developed upon combustion a spin about the axis of the duct.

In the embodiment illustrated in Figures 1 and 2 the internal surface of the duct 8 has a polygonal transverse section (see Figure 2) and in particular a hexagonal section. From the constructional point of view this polygonal configuration of the section is particularly favourable to the reduction of the transverse dimension of the duct.

The inner surface of the duct 8 has a conformation corresponding to the combined rotation and translation of the basic polygonal section about and along the axis A-A of the duct 8.

Consequently, in the exemplary case of a hexagonal section, the internal surface of the duct 8 is formed by six adjacent helical strips 9 each corresponding to one side of the polygon (hexagon) of the basic section.

The shape of the internal surface of the duct 8 of the microcombustor according to Figures 1 and 2 can be achieved very easily from the technological point of view.

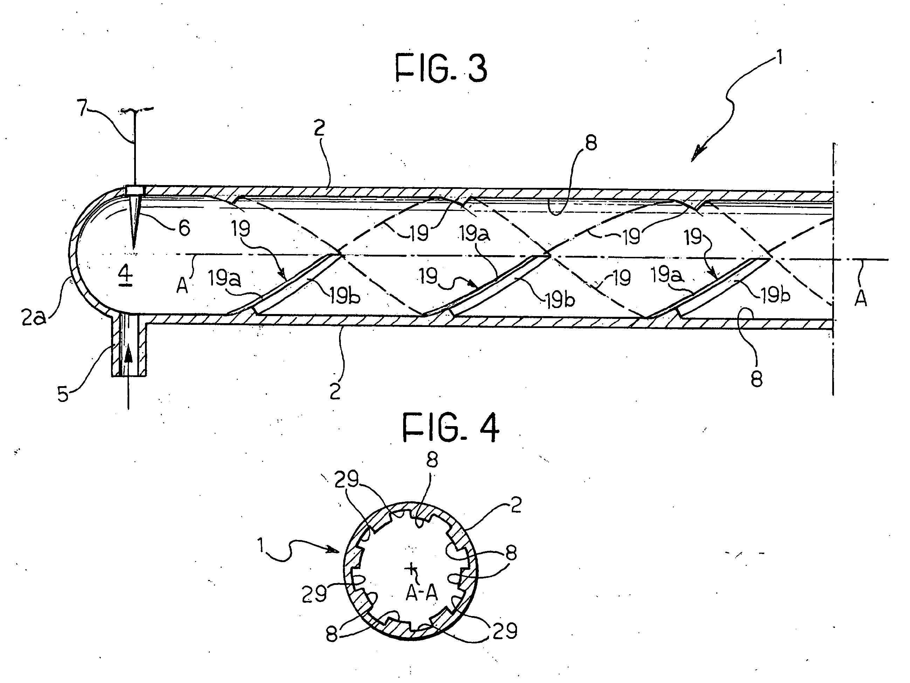

Another microcombustor is illustrated in Figure 3. In this figure the parts and elements which are the same or substantially correspond to parts already described have again been attributed the same reference numerals.

In the microcombustor according to Figure 3, the inner surface of the duct 8 has a plurality of projecting formations 19 of helical shape in the form of threads. In particular, in the non-limitative example illustrated the inner surface of the duct 8 has two helical ridge elements 19 in the form of a two-start thread.

Conveniently, the section of each helical formation 19 is essentially triangular, in the form of saw teeth, with a larger side 19a facing the chamber 4 and a shorter side 19b facing the outlet end of the duct 8. Correspondingly, the inclination with respect of the axis A-A of the side 19a is less than the inclination of the side 19b. This type of profile, as well as introducing turbulence by diffraction and spin-rotation of the combustion front, also has the function of combating the reflected wave thereby contributing to an increase of the thrust as well as the function of introducing further turbulence on this reflected wave.

In Figure 4 is shown a further microcombustor in which the internal surface of the duct 8 of the microcombustor has a plurality of grooves 29 which also have a helical development about the axis A-A of the said duct.

As already indicated above, the formations of the internal surface of the duct 8 of the microcombustor make it possible effectively to impart a spin to the flow of exhaust gases, limiting the divergence of these latter gases at the outlet of the duct.

In effect, if the duct was smooth the divergence of the exhaust gases would be predominantly dominated by diffraction effects, and therefore by the section of the duct closest to the outlet. In the arrangement according to the present invention the divergence of the exhaust gases is also dominated, and predominantly, by the "rifling" of the duct more than by the output section of the duct, which imparts a rotary-motion to the gases. The improved directionality of the gases increases the force of the thrust in the case of use as propulsion means, whilst in applications for actuation for example of a turbine, there is a greater transfer of the force impulse onto the turbine itself. The said formations also further create a turbulence within the duct 8 which is important to facilitate the transition to detonation conditions.

Overall, by virtue of the improved stabilisation of the exhaust gases from the microcombustor, the operative use of the exhaust gases is improved and this is achieved both in thrusters and in applications in which the exhaust gases serve for rotating turbines or rotors of electric generators.

Naturally, the principle of the invention remaining the same, the embodiments and details can be varied with respect to what has been described and illustrated purely by way of non-limitative example, without by this departing from the ambit of the annexed Claims.

## Claims

1. A microcombustor (1) comprising an essentially tubular body (2) with a closed end (2a) close to which is defined a chamber (4) for supply and ignition of a fuel mixture, which communicates with a duct (8) within the body (2) having a length greater than its average transverse dimension, and able to allow the generation and propagation of the combustion and the consequent pressure wave as well as the transition from slow deflagration conditions to fast deflagration conditions and/or to detonation conditions; the inner surface of the said duct (8) having a plurality of formations (9) adapted to impart to the flow of gases developed in the combustion a spin about the axis (A-A) of the duct (8) ;
the microcombustor being **characterized in that** the duct (8) has an internal surface the form of which corresponds to that obtained by means of a combined rotation and translation of a polygon about the axis (A-A) of the duct (8).

2. A microcombustor according to claim 1, wherein said polygon is a hexagon.

## Patentansprüche

1. Mikrobrenner (1), umfassend einen im Wesentlichen röhrenförmigen Körper (2) mit einem verschlossenen Ende (2a), in dessen Nähe eine Kammer (4) zum Zuführen und Entzünden eines Kraftstoffgemisches definiert ist, welche mit einem Rohr (8) innerhalb des Körpers (2) in Verbindung steht, das eine Länge aufweist, die größer als seine mittlere Querausdehnung ist, und die Erzeugung und Ausbreitung der Verbrennung und der daraus resultierenden Druckwelle sowie den Übergang von Bedingungen einer langsamen Verpuffung zu Bedingungen einer raschen Verpuffung und/oder zu Detonationsbedingungen ermöglichen kann; wobei die Innenfläche des Rohrs (8) eine Mehrzahl von Gebilden (9) aufweist, die dazu angepasst sind, dem Strom der bei der Verbrennung entstandenen Gase eine Drehung um die Achse (A-A) des Rohrs (8) zu verleihen;
wobei der Mikrobrenner **dadurch gekennzeichnet ist, dass** das Rohr (8) eine Innenfläche aufweist, deren Form jener entspricht, die mittels einer kombinierten Rotation und Translation eines Polygons um die Achse (A-A) des Rohrs (8) erhalten wird.

2. Mikrobrenner gemäß Anspruch 1, wobei das Polygon ein Hexagon ist.

## Revendications

1. Micro-brûleur (1) comprenant un corps essentiellement tubulaire (2) avec une extrémité fermée (2a) à proximité de laquelle est définie une chambre (4) pour l'alimentation et l'allumage d'un mélange de carburants, qui communique avec une conduite (8) à l'intérieur du corps (2) ayant une longueur supérieure à sa dimension transversale moyenne et qui permet la production et la propagation de la combustion et de l'onde de pression qui en résulte ainsi que la transition entre des conditions de déflagration lente et des conditions de déflagration rapide et/ou des conditions de détonation ; la surface interne de ladite conduite (8) comprenant une pluralité de formations (9) conçues pour conférer à l'écoulement des gaz générés lors de la combustion une rotation autour de l'axe (A-A) de la conduite (8) ;
le micro-brûleur étant **caractérisé en ce que** la conduite (8) présente une surface interne dont la forme correspond à celle qui est obtenue à l'aide de la combinaison d'une rotation et d'une translation d'un polygone autour de l'axe (A-A) de la conduite (8).

2. Micro-brûleur selon la revendication 1, dans lequel ledit polygone est un hexagone.
